# EUROPEAN PATENT APPLICATION

(11) **EP 4 524 912 A1**
(43) Date of publication of application: **19.03.2025**
(21) Application number: 22952255.2
(22) Date of filing: 26.07.2022
(51) Int. Cl.: G06V 30/142, G06F 18/00, G01L 5/00

(54) **DICTIONARY PEN**

(71) Applicant: Netease Youdao (Hangzhou) Smart Technology Co., Ltd., Zhejiang 310052 (CN)
(72) Inventor: WU,Yinghui, Beijing 100094 (CN); WU,Wangyang, Beijing 100094 (CN); ZNANG,Huijun, Beijing 100094 (CN); GAO,Yang, Beijing 100094 (CN); LIU,Peihong, Beijing 100094 (CN); WANG, Xudong, Beijing 100094 (CN); ZHANG,Ruibo, Beijing 100094 (CN)
(74) Representative: Michalski Hüttermann & Partner Patentanwälte mbB
(86) International application number: PCT/CN2022/107974
(87) International publication number: WO 2024/020790

(57) **Abstract**

The present application provides a dictionary pen, comprising a housing (10) and a pressure sensor (20). A front end of the housing (10) is provided with an opening (11) running through in a vertical direction. The housing (10) is provided with a front wall structure (12) on a front side of the opening (11), and two side wall structures (13) on left and right sides of the opening (11), respectively. The pressure sensor (20) is disposed into the opening (11) and mounted on the front wall structure (12) or either of the side wall structures (13). The pressure sensor (20) is configured to detect a press action of a user on the front end of the housing (10), so that the dictionary pen enables or disables a scanning function according to detection data of the pressure sensor (20). The dictionary pen can enable the scanning function when the pressure sensor (20) recognizes and detects a press action of a user on the front end of the housing (10), and otherwise disable the scanning function.

## Description

### TECHNICAL FIELD

The present application relates to the technical field of electronic pens, and specifically relates to a dictionary pen.

### BACKGROUND OF THE INVENTION

Current dictionary pens in the market are typically provided with a trigger structure including an antenna, a spring, and a micro-switch at the bottom. When the dictionary pen is pressed against content to be scanned by a user, the antenna contracts towards an interior of the dictionary pen and triggers the micro-switch so that the dictionary pen enables a scanning function; and when the user lifts the dictionary pen, the antenna is reset by the spring under an elastic force so that the dictionary pen disables the scanning function.

### SUMMARY OF THE INVENTION

### Technical Problem

One object of the embodiments of the present application is to provide a dictionary pen.

### Solution to Problem

### Technical Solution

The embodiments of the present application adopt the following technical solutions:

In a first aspect, there is provided a dictionary pen, comprising:
a housing having a front end provided with an opening running through in a vertical direction, where the housing has a front wall structure on a front side of the opening, and two side wall structures on left and right sides of the opening, respectively; and
a pressure sensor disposed into the opening and mounted on the front wall structure or either of the side wall structures, where the pressure sensor is configured to detect a press action of a user on the front end of the housing, so that the dictionary pen enables or disables a scanning function according to detection data of the pressure sensor.

In one embodiment, the pressure sensor is mounted on either of the side wall structures, the side wall structure with the pressure sensor has a strain detection area at least partially covered by the pressure sensor, and a first stress slot is provided in the strain detection area.

In one embodiment, the first stress slot is formed to extend and run through in the vertical direction.

In one embodiment, the side wall structure includes a side wall body, and a first structural member mounted inside the side wall body and forming the strain detection area, where the first structural member is provided with at least part of the first stress slot.

In one embodiment, a plurality of pressure sensors are provided and arranged on the two side wall structures, respectively.

In one embodiment, the pressure sensor is mounted on the front wall structure, the front wall structure includes a front wall body and a force-bearing member, a mounting slot is provided on a front side of the front wall body, a hollow slot is provided in a bottom of the mounting slot, the force-bearing member is mounted into the mounting slot, the pressure sensor is mounted on a rear side of the force-bearing member, and the pressure sensor is spaced apart from a bottom of the hollow slot.

In one embodiment, a second stress slot is provided on the rear side of the force-bearing member.

In one embodiment, the second stress slot is formed to extend in a left-right direction.

In one embodiment, the pressure sensor is mounted on the front wall structure, the front wall structure includes a front wall body, a force-bearing member, and a second structural member, a mounting slot is provided on a front side of the front wall body, a hollow slot is provided in a bottom of the mounting slot, the force-bearing member and the second structural member are both mounted into the mounting slot, the second structural member is mounted on a rear side of the force-bearing member, the pressure sensor is mounted on a rear side of the second structural member, and the pressure sensor is spaced apart from a bottom of the hollow slot.

In one embodiment, a third stress slot is provided on the rear side of the second structural member and/or the force-bearing member.

In one embodiment, the third stress slot is formed to extend in a left-right direction.

In one embodiment, the pressure sensor is mounted on the front wall structure, the front wall structure includes a front wall body and a force-bearing member, a mounting slot is formed in a front side surface of the front wall body, the force-bearing member is mounted into the mounting slot, a fourth stress slot is provided in a bottom of the mounting slot, and the pressure sensor is mounted on a rear side of the front wall body corresponding to the mounting slot.

In one embodiment, the fourth stress slot is formed to run through in a front-rear direction.

In one embodiment, the fourth stress slot is formed to extend in a left-right direction.

In one embodiment, an arc surface is provided on a front side of the force-bearing member.

In one embodiment, the pressure sensor is bonded to the front wall structure or either of the side wall structures.

In one embodiment, the pressure sensor is a pressure sensor of a high polymer material.

In one embodiment, the dictionary pen further includes two glass screens sealing and covering an upper aperture and a lower aperture of the opening, respectively.

### Advantageous Effects of Invention

### Advantageous Effects

The dictionary pen provided in the embodiments of the present application has the following advantageous effects:

According to the dictionary pen provided in the embodiments of the present application, when a user holds the dictionary pen and presses a front end of a housing of the dictionary pen against content to be scanned, a pressing force may be borne by a front wall structure and transmitted to the front wall structure and side wall structures so that the front wall structure or the side wall structure with a pressure sensor is at least partially strained under a stress. On this basis, the pressure sensor can detect a strain amount and a change condition of a coverage area of the pressure sensor to recognize and detect "whether the user presses the front end of the housing", and according to the detection data of the pressure sensor, the dictionary pen can enable a scanning function when the pressure sensor recognizes and detects a press action of the user on the front end of the housing, and otherwise disable the scanning function.

### BRIEF DESCRIPTION OF THE DRAWINGS

### Description of the Drawings

To illustrate the technical solutions in the embodiments of the present application more clearly, the drawings to be used in description of the embodiments or the exemplary technique will be briefly described below. Apparently, the drawings in the following description are merely some embodiments of the present application, and other drawings may be derived from these drawings by those of ordinary skill in the art without any creative labor.
FIG. 1 is a perspective view of a dictionary pen according to a first embodiment of the present application;
FIG. 2 is an exploded view of the dictionary pen of FIG. 1;
FIG. 3 is an exploded view of a dictionary pen according to a second embodiment of the present application;
FIG. 4 is a perspective view of a dictionary pen according to a third embodiment of the present application;
FIG. 5 is a cross-sectional view of the dictionary pen of FIG. 4;
FIG. 6 is a schematic structural diagram of a dictionary pen according to a fourth embodiment of the present application;
FIG. 7 is a schematic structural diagram of a dictionary pen according to a fifth embodiment of the present application; and
FIG. 8 is a schematic structural diagram of a dictionary pen according to a sixth embodiment of the present application.

### Reference Signs:

10 - housing, 11 - opening, 12 - front wall structure, 13 - side wall structure, 131 - strain detection area, 1311 - first stress slot; 132 - side wall body, 133 - first structural member; 121 - front wall body, 1211 - mounting slot, 1212 - hollow slot, 122 - force-bearing member, 1221 - second stress slot, 1222 - arc surface; 123 - second structural member, 124 - third stress slot; 1213 - fourth stress slot; 20 - pressure sensor; and 30 - double-sided adhesive tape.

### DETAIL DESCRIPTION OF THE INVENTION

To make the technical problem to be solved, technical solutions and advantageous effects of the present application clearer and more apparent, the present application is described in detail below with reference to the accompanying drawings and embodiments. It will be appreciated that the specific embodiments described herein are merely for illustration of the present application and are not intended to limit the present application.

In the description of the present application, it is to be understood that the terms "length", "width", "upper", "lower", "front", "rear", "left", "right", "vertical", "horizontal", "top", "bottom", "inner", "outer", and the like are based on the orientations or positional relationships shown in the drawings, and are merely for the purposes of describing the present application and simplifying the description, instead of indicting or implying that the device or component referred to must have a specific orientation or be configured or operated at a specific orientation, and thus should not be interpreted as limitations to the present application.

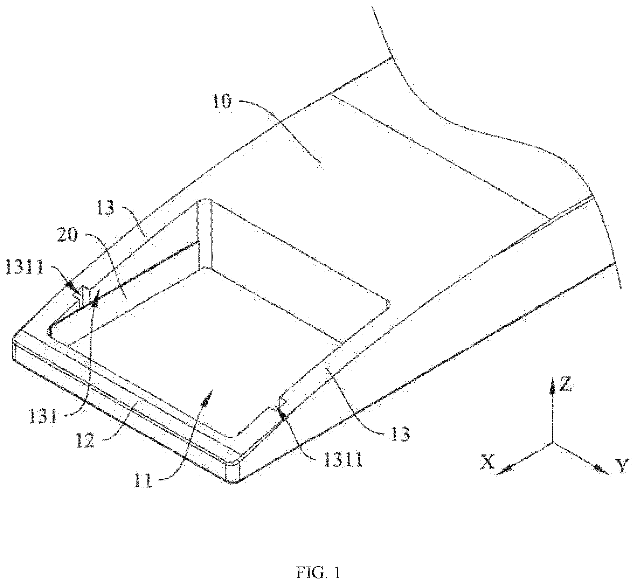

It should be further noted that, in the embodiments of the present application, according to the XYZ rectangular coordinate system established in FIG. 1, it is defined that: a side in a forward direction of the X axis is defined as the front side, while a side in a backward direction of the X axis is defined as the back side; a side in a forward direction of the Y axis is defined as the left side, while a side in a backward direction of the Y axis is defined as the right side; and a side in a forward direction of the Z axis is defined as the upper side, while a side in a backward direction of the Z axis is defined as the lower side.

Furthermore, the terms "first", "second", and the like are used for descriptive purposes only and are not to be construed as indicating or implying relative importance or to implicitly indicate a number of the indicated technical features. Therefore, a feature defined by "first" or "second" may include one or more of the indicated feature either explicitly or implicitly. In the description of the present application, "a plurality of" means two or more unless explicitly defined otherwise.

In this application, unless expressly stated or limited otherwise, the terms "mounted", "connected", "secured", and the like are to be construed broadly and encompass, for example, both fixed and removable connection, or integral connection; or may include mechanical or electrical connection; or direct connection, indirect connection via an intermedium, or internal communication or interaction between two elements. The specific meaning of the above terms in the present application may be understood by those of ordinary skill in the art as the case may be.

Current dictionary pens in the market are typically provided with a trigger structure including an antenna, a spring, and a micro-switch at the bottom. When the dictionary pen is pressed against content to be scanned by a user, the antenna contracts towards an interior of the dictionary pen and triggers the micro-switch so that the dictionary pen enables a scanning function; and when the user lifts the dictionary pen, the antenna is reset by the spring under an elastic force so that the dictionary pen disables the scanning function. On this basis, the trigger structure has a relatively complicated configuration and occupies relatively large space, which restricts the design and development of dictionary pens, resulting in dictionary pens of high homogenization and monotonous user experience in the market.

Therefore, some embodiments of the present application provide a novel dictionary pen that can detect a press action of a user on a front end of a housing by a pressure sensor in real time, and enable or disable a scanning function according to detection data of the pressure sensor.

To explain the technical solutions of the present application, the present application is described in detail below with reference to the accompanying drawings and embodiments.

### First embodiment

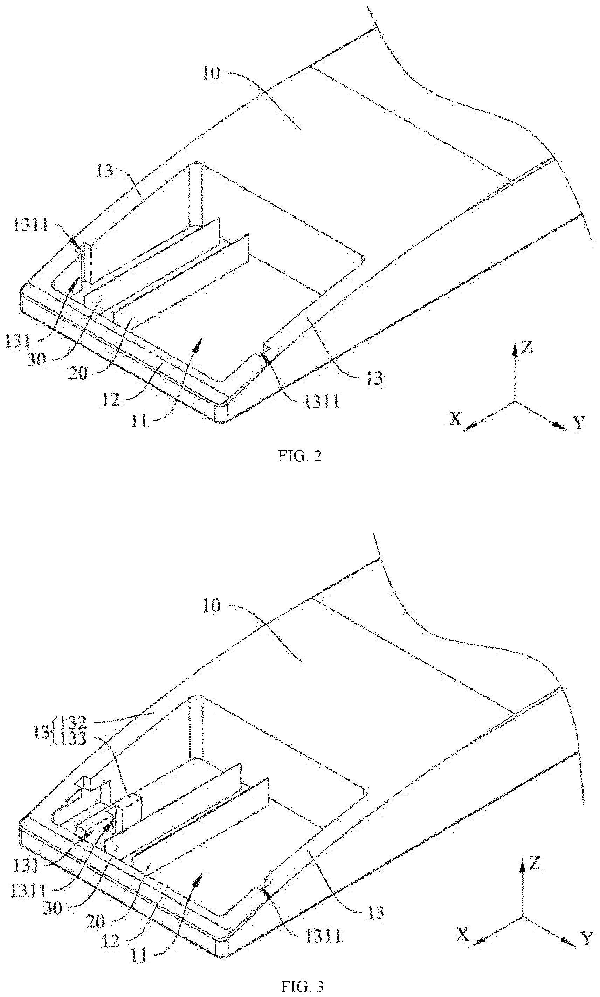

Referring to FIGs. 1 and 2, some embodiments of the present application provide a dictionary pen, which includes a housing 10 and a pressure sensor 20. A front end of the housing 10 is provided with an opening 11 running through in a vertical direction. The housing 10 is provided with a front wall structure 12 on a front side of the opening 11, and two side wall structures 13 on left and right sides of the opening 11, respectively. The pressure sensor 20 is disposed into the opening 11 and mounted on the front wall structure 12 or either of the side wall structures 13. The pressure sensor 20 is configured to detect a press action of a user on the front end of the housing 10, so that the dictionary pen enables or disables a scanning function according to detection data of the pressure sensor 20.

It should be noted here that the housing 10 may be an integral structure, or may include separate structures connected together, which is not limited in the embodiment. By means of the front end of the housing 10 provided with the opening 11 running through in a vertical direction, and the pressure sensor 20 disposed into the opening 11, the housing 10 can protect the pressure sensor 20 from dust, water and the like, thereby ensuring the service performance and service life of the pressure sensor 20.

At least one pressure sensor 20 is provided. When only one pressure sensor 20 is provided, the one pressure sensor 20 may be mounted on the front wall structure 12 or either of the side wall structures 13; and when a plurality of pressure sensors 20 are provided, the plurality of pressure sensors 20 may be mounted on the front wall structure 12 and/or the side wall structures 13, respectively, which is not limited in the embodiment.

Since the pressure sensor 20 is mounted on the front wall structure 12 or either of the side wall structures 13, when the front wall structure 12 or the side wall structure 13 with the pressure sensor 20 is at least partially strained under a stress, the pressure sensor 20 can detect a strain amount and a change condition of a coverage area of the pressure sensor to recognize and detect "whether the user presses the front end of the housing 10".

It should be further noted here that a lower aperture of the opening 11 forms a scanning window, and the dictionary pen further includes a scanning module (not shown in the figure) in signal connection with the pressure sensor 20. According to the detection data of the pressure sensor 20, when the pressure sensor 20 recognizes and detects a press action of a user on the front end of the housing 10, the scanning module can enable a scanning function and scan and read the scanned content through the scanning window; and otherwise, the scanning module disables the scanning function.

Therefore, according to the dictionary pen provided in the embodiments of the present application, when a user holds the dictionary pen and presses a front end of a housing 10 of the dictionary pen against content to be scanned, a pressing force may be borne by a front wall structure 12 and transmitted to the front wall structure 12 and side wall structures 13 so that the front wall structure 12 or the side wall structure 13 with a pressure sensor 20 is at least partially strained under a stress. On this basis, the pressure sensor 20 can detect a strain amount and a change condition of a coverage area of the pressure sensor to recognize and detect "whether the user presses the front end of the housing 10", and according to the detection data of the pressure sensor 20, the dictionary pen can enable a scanning function when the pressure sensor 20 recognizes and detects a press action of the user on the front end of the housing 10, and otherwise disable the scanning function.

Therefore, compared with the existing dictionary pens, the dictionary pen provided in the embodiments of the present application can significantly reduce the number of parts and the structural complexity of a relevant structure for triggering the dictionary pen to enable or disable a scanning function, significantly save the space occupied by the relevant structure for triggering the dictionary pen to enable or disable a scanning function, provide more possibilities for the design and development of the dictionary pen, and effectively improve the use experience of the dictionary pen.

Referring to FIGs. 1 and 2, in this embodiment, the pressure sensor 20 is mounted on either of the side wall structures 13, the side wall structure 13 with the pressure sensor 20 has a strain detection area 131 at least partially covered by the pressure sensor 20, and a first stress slot 1311 is provided in the strain detection area 131.

Based on the arrangement of this embodiment, when a user holds the dictionary pen and presses a front end of a housing 10 of the dictionary pen against content to be scanned, a pressing force may be borne by the front wall structure 12 and transmitted to the side wall structure 13, and then, due to the first stress slot 1311 in the strain detection area 131 of the side wall structure 13, the stress will be concentrated at and near the first stress slot 1311, so that the strain detection area 131 generates concentrated strain at and near the first stress slot 1311 under the concentrated stress. As a result, the pressure sensor 20 at least partially covering the strain detection area 131 can detect a strain amount and a change condition of the coverage area in a sensitive, reliable and effective manner, and thereby recognize and detect "whether the user presses the front end of the housing 10" accurately.

In this embodiment, parameters (such as a depth, a width and the like) of the first stress slot 1311 are not limited uniquely.

Referring to FIGs. 1 and 2, in this embodiment, the first stress slot 1311 is formed to extend and run through in the vertical direction.

With the first stress slot 1311 formed to extend and run through in the vertical direction, an extending direction of the first stress slot 1311 may be intersected with or even perpendicular to a stress direction, and the structural strength of the strain detection area 131 at and near the first stress slot 1311 may be relatively reduced, while the structural strength of portions of the strain detection area 131 at both front and rear sides of the first stress slot 1311 can be ensured. On this basis, the stress can be concentrated at and near the first stress slot 1311, so that the strain detection area 131 generates concentrated compression strain at and near the first stress slot 1311 under the concentrated stress, and further, the pressure sensor 20 can detect a strain amount and a change condition of the coverage area in a sensitive, reliable and effective manner, and thereby recognize and detect "whether the user presses the front end of the housing 10" accurately.

Apparently, in other possible implementations, the first stress slot 1311 may be formed to extend in other directions; and/or, the first stress slot 1311 may be formed to extend but not run through in other directions; and/or, a plurality of first stress slots 1311 may be provided and arranged in a crossed manner, which is not limited in the embodiment.

Referring to FIGs. 1 and 2, in this embodiment, the side wall structure 13 is an integral structure. With such arrangement, the processing of the side wall structure 13 can be facilitated, and the assembling process of the side wall structure 13 can be simplified.

Referring to FIGs. 1 and 2, in this embodiment, a plurality of pressure sensors 20 are provided and arranged on the two side wall structures 13, respectively.

Based on the arrangement of this embodiment, when a user holds the dictionary pen and presses a front end of a housing 10 of the dictionary pen against content to be scanned, a pressing force may be borne by the front wall structure 12 and transmitted to the two side wall structures 13, and then the plurality of pressure sensors 20 on the two side wall structures 13 can respectively detect strain amounts and a change conditions of the respective side wall structures 13, so that detection data from the plurality of pressure sensors 20 can be integrated to accurately recognize and detect "whether the user presses the front end of the housing 10".

Referring to FIGs. 1 and 2, in this embodiment, the pressure sensor 20 is bonded to the front wall structure 12 or either of the side wall structures 13. Specifically, the pressure sensor 20 may be bonded to the front wall structure 12 or the side wall structure 13 by, but not limited to, a double-sided adhesive tape 30, a glue film, glue dispensing, glue, or the like. With such arrangement, the connection convenience, reliability, and stability of the pressure sensor 20 and the front wall structure 12 or the side wall structure 13 can be ensured and improved.

Referring to FIGs. 1 and 2, in this embodiment, the pressure sensor 20 is a pressure sensor 20 of a high polymer material.

By adopting the above scheme, the pressure sensor 20 can have the characteristics of firmness, light weight, softness, flexibility, impact resistance and the like, and can detect a strain at the micron level, so that the service performance and detection accuracy of the pressure sensor 20 can be further ensured and improved, and the service life of the pressure sensor 20 can be ensured and prolonged.

Apparently, in other possible implementations, the pressure sensor 20 may be a piezoresistive pressure sensor, a piezoelectric pressure sensor, a capacitive pressure sensor, or other types of sensors.

In the existing art, since the antenna is a movable part, the existing dictionary pen cannot be effectively sealed at least at the antenna, so that the existing dictionary pen is susceptible to water and dust invasion, thereby affecting the service performance and service life of the existing dictionary pen.

In this regard, referring to FIGs. 1 and 2, in this embodiment, the dictionary pen further includes two glass screens (not shown) sealing and covering an upper aperture and a lower aperture of the opening 11, respectively.

By adopting the above scheme, the dictionary pen provided in the embodiments of the present application can, based on the pressure sensor 20 disposed into the opening 11, seal and cover the upper aperture and the lower aperture of the opening 11 with the two glass screens, respectively, so that the pressure sensor 20 can be sealed in an interior space jointly by the two glass screens and the housing 10. On this basis, the sealing, dustproof and waterproof performance of the dictionary pen can be effectively ensured and improved, the service performance of the dictionary pen can be effectively ensured and improved, and the service life of the dictionary pen can be effectively ensured and prolonged.

### Second embodiment

This embodiment differs from the first embodiment in that:
Referring to FIG. 3, in this embodiment, the side wall structure 13 includes a side wall body 132, and a first structural member 133 mounted inside the side wall body 132 and forming the strain detection area 131. The first structural member 133 is provided with at least part of the first stress slot 1311.

By adopting the above scheme, the side wall body 132 can be formed separately from the first structural member 133 which forms the strain detection area 131 to facilitate formation of the first structural member 133 and the first stress slot 1311. Then the first structural member 133 is mounted inside the side wall body 132 by embedding or the like. In this manner, the strain detection area 131 can also generate concentrated strain at and near the first stress slot 1311 under the concentrated stress, so that the pressure sensor 20 can detect a strain amount and a change condition of the strain detection area 131, and recognize and detect "whether the user presses the front end of the housing 10".

### Third embodiment

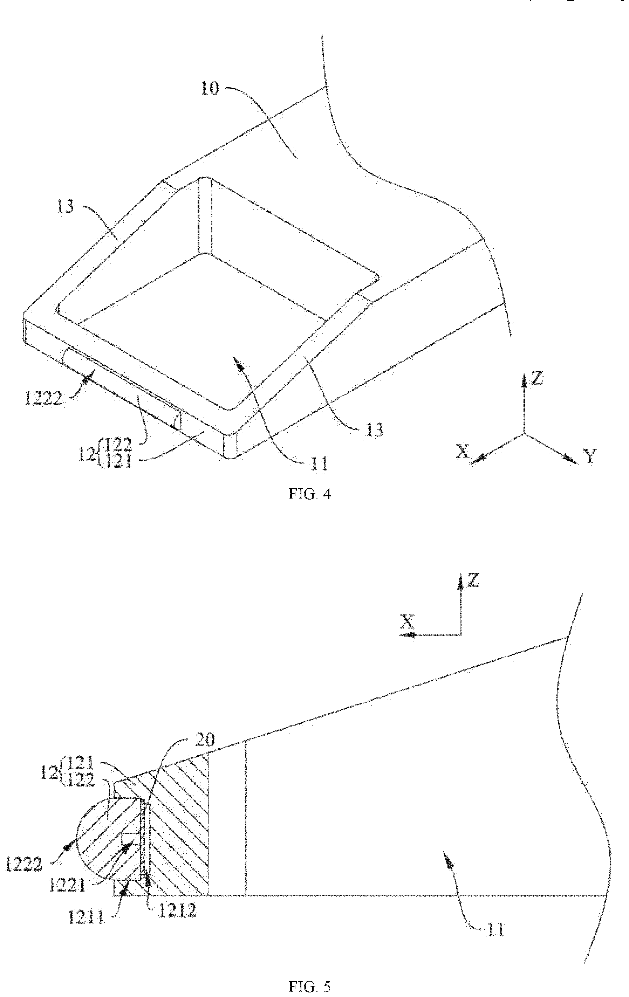

This embodiment differs from the first embodiment in that:
Referring to FIGs. 4 and 5, in this embodiment, the pressure sensor 20 is mounted on the front wall structure 12, the front wall structure 12 includes a front wall body 121 and a force-bearing member 122, a mounting slot 1211 is provided on a front side of the front wall body 121, a hollow slot 1212 is provided in a bottom of the mounting slot 1211, the force-bearing member 122 is mounted into the mounting slot 1211, the pressure sensor 20 is mounted on a rear side of the force-bearing member 122, and the pressure sensor 20 is spaced apart from a bottom of the hollow slot 1212.

It should be noted here that an edge portion of the force-bearing member 122 is supported by the bottom of the mounting slot 1211, while a portion of the force-bearing member 122 corresponding to the hollow slot 1212 is suspended, so that the force-bearing member 122 can form a strain beam capable of generating strain under a stress.

The pressure sensor 20 is mounted on a rear side of the force-bearing member 122, so that when the force-bearing member 122 generates strain under a stress, the pressure sensor 20 can detect a strain amount and a change condition of a coverage area of the pressure sensor to recognize and detect "whether the user presses the front end of the housing 10". In this process, the hollow slot 1212, in particular a clearance space between the pressure sensor 20 and the bottom of the hollow slot 1212, can form a deformation space for deformation of the force-bearing member 122 and the pressure sensor 20.

Therefore, based on the arrangement of this embodiment, when a user holds the dictionary pen and presses a front end of a housing 10 of the dictionary pen against content to be scanned, the force-bearing member 122 can bear the pressing force and generate strain under a stress. On this basis, the pressure sensor 20 mounted on the rear side of the force-bearing member 122 can detect a strain amount and a change condition of a coverage area of the pressure sensor to recognize and detect "whether the user presses the front end of the housing 10". Then, according to the detection data of the pressure sensor 20, the dictionary pen can enable a scanning function when the pressure sensor 20 recognizes and detects a press action of the user on the front end of the housing 10, and otherwise disable the scanning function.

Referring to FIGs. 4 and 5, in this embodiment, a second stress slot 1221 is provided on the rear side of the force-bearing member 122.

By providing the second stress slot 1221 on the rear side of the force-bearing member 122, the structural strength of the force-bearing member 122 at and near the second stress slot 1221 can be relatively reduced. On this basis, when the force-bearing member 122 bears a pressing force, the stress can be concentrated at and near the second stress slot 1221, so that the force-bearing member 122 is prone to generate concentrated strain at and near the second stress slot 1221. As a result, the pressure sensor 20 can detect a strain amount and a change condition of the coverage area in a sensitive, reliable and effective manner, and thereby recognize and detect "whether the user presses the front end of the housing 10" accurately.

Referring to FIGs. 4 and 5, in this embodiment, the second stress slot 1221 is formed to extend in a left-right direction.

With the second stress slot 1221 formed to extend in the left-right direction, an extending direction of the second stress slot 1221 may be intersected with or even perpendicular to a stress direction, and the structural strength of the force-bearing member 122 at and near the second stress slot 1221 can be relatively reduced, while the structural strength of portions of the force-bearing member 122 at both upper and lower sides of the second stress slot 1221 can be ensured. On this basis, the stress can be concentrated at and near the second stress slot 1221, so that the force-bearing member 122 generates concentrated bending strain at and near the second stress slot 1221 under the concentrated stress, and further, the pressure sensor 20 can detect a strain amount and a change condition of the coverage area in a sensitive, reliable and effective manner, and thereby recognize and detect "whether the user presses the front end of the housing 10" accurately.

In this embodiment, parameters (such as a depth, a width and the like) of the second stress slot 1221 are not limited uniquely.

Apparently, in other possible implementations, the second stress slot 1221 may be formed to extend and either run through or not run through in other directions; and/or, the second stress slot 1221 may be formed to extend in other directions; and/or, a plurality of second stress slots 1221 may be provided and arranged in a crossed manner, which is not limited in the embodiment.

### Fourth Embodiment

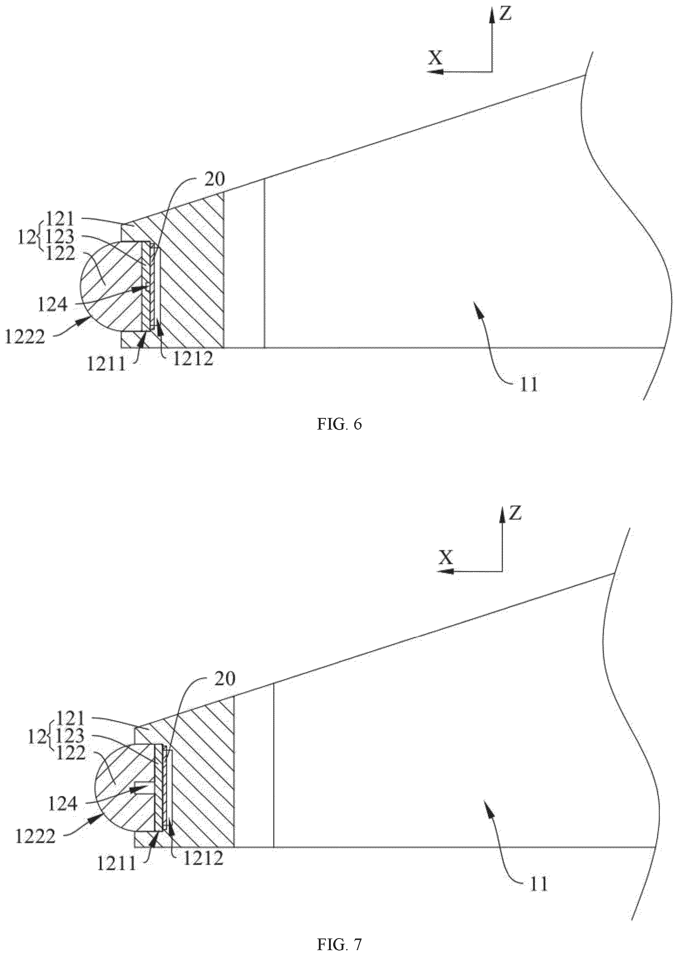

This embodiment differs from the first embodiment in that:
Referring to FIG. 6, in this embodiment, the pressure sensor 20 is mounted on the front wall structure 12, the front wall structure 12 includes a front wall body 121, a force-bearing member 122, and a second structural member 123, a mounting slot 1211 is provided on a front side of the front wall body 121, a hollow slot 1212 is provided in a bottom of the mounting slot 1211, the force-bearing member 122 and the second structural member 123 are both mounted into the mounting slot 1211, the second structural member 123 is mounted on a rear side of the force-bearing member 122, the pressure sensor 20 is mounted on a rear side of the second structural member 123, and the pressure sensor 20 is spaced apart from a bottom of the hollow slot 1212.

It should be noted here that an edge portion of the second structural member 123 is supported by the bottom of the mounting slot 1211, while a portion of the second structural member 123 corresponding to the hollow slot 1212 is suspended, so that the second structural member 123 can form a strain beam capable of generating strain under a stress. The second structural member 123 may be, but is not limited to, a steel sheet.

The pressure sensor 20 is mounted on a rear side of the second structural member 123, so that when the second structural member 123 generates strain under a stress, the pressure sensor 20 can detect a strain amount and a change condition of a coverage area of the pressure sensor to recognize and detect "whether the user presses the front end of the housing 10". In this process, the hollow slot 1212, in particular a clearance space between the pressure sensor 20 and the bottom of the hollow slot 1212, can form a deformation space for deformation of the second structural member 123 and the pressure sensor 20.

Therefore, based on the arrangement of this embodiment, when a user holds the dictionary pen and presses a front end of a housing 10 of the dictionary pen against content to be scanned, the force-bearing member 122 can bear the pressing force and transmit the pressing force to the second structural member 123, and then, the second structural member 123 generates strain under a stress. On this basis, the pressure sensor 20 mounted on the rear side of the second structural member 123 can detect a strain amount and a change condition of a coverage area of the pressure sensor to recognize and detect "whether the user presses the front end of the housing 10". Then, according to the detection data of the pressure sensor 20, the dictionary pen can enable a scanning function when the pressure sensor 20 recognizes and detects a press action of the user on the front end of the housing 10, and otherwise disable the scanning function.

Referring to FIG. 6, in this embodiment, a third stress slot 124 is provided on the rear side of the second structural member 123.

By providing the third stress slot 124 on the rear side of the second structural member 123, the structural strength of the second structural member 123 at and near the third stress slot 124 can be relatively reduced. On this basis, when the second structural member 123 bear a stress, the stress can be concentrated at and near the third stress slot 124, so that the second structural member 123 is prone to generate concentrated strain at and near the third stress slot 124. As a result, the pressure sensor 20 can detect a strain amount and a change condition of the coverage area in a sensitive, reliable and effective manner, and thereby recognize and detect "whether the user presses the front end of the housing 10" accurately.

Referring to FIG. 6, in this embodiment, the third stress slot 124 is formed to extend in a left-right direction.

With the third stress slot 124 formed to extend in the left-right direction, an extending direction of the third stress slot 124 may be intersected with or even perpendicular to a stress direction, and the structural strength of the second structural member 123 at and near the third stress slot 124 can be relatively reduced, while the structural strength of portions of the second structural member 123 at both upper and lower sides of the third stress slot 124 can be ensured. On this basis, the stress can be concentrated at and near the third stress slot 124, so that the second structural member 123 generates concentrated bending strain at and near the third stress slot 124 under the concentrated stress, and further, the pressure sensor 20 can detect a strain amount and a change condition of the coverage area in a sensitive, reliable and effective manner, and thereby recognize and detect "whether the user presses the front end of the housing 10" accurately.

In this embodiment, parameters (such as a depth, a width and the like) of the third stress slot 124 are not limited uniquely.

Apparently, in other possible implementations, the third stress slot 124 may be formed to extend and either run through or not run through in other directions; and/or, the third stress slot 124 may be formed to extend in other directions; and/or, a plurality of third stress slots 124 may be provided and arranged in a crossed manner, which is not limited in the embodiment.

### Fifth Embodiment

Referring to FIG. 7, in this embodiment, a third stress slot 124 is provided on the rear side of the force-bearing member 122.

By providing the third stress slot 124 at the rear side of the force-bearing member 122, the structural strength of the force-bearing member 122 at and near the third stress slot 124 can be relatively reduced. On this basis, when the force-bearing member 122 bears a pressing force, the stress can be concentrated at and near the third stress slot 124, so that a portion of the second structural member 123 at and near the third stress slot 124 is prone to generate concentrated strain. As a result, the pressure sensor 20 can detect a strain amount and a change condition of the coverage area in a sensitive, reliable and effective manner, and thereby recognize and detect "whether the user presses the front end of the housing 10" accurately.

### Sixth Embodiment

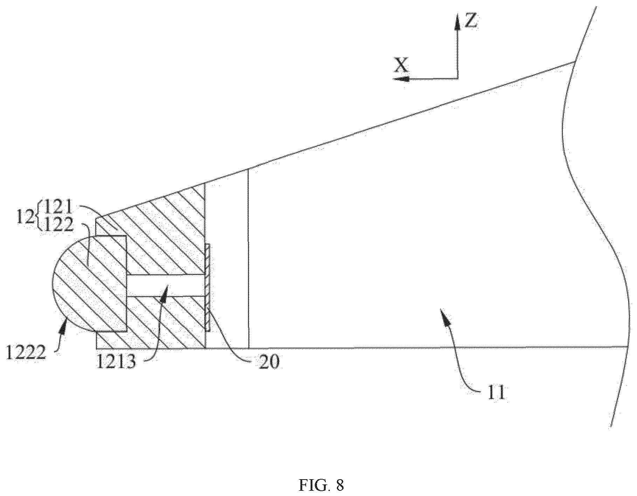

This embodiment differs from the first embodiment in that:
Referring to FIG. 8, in this embodiment, the pressure sensor 20 is mounted on the front wall structure 12, the front wall structure 12 includes a front wall body 121 and a force-bearing member 122, a mounting slot 1211 is formed in a front side surface of the front wall body 121, the force-bearing member 122 is mounted into the mounting slot 1211, a fourth stress slot 1213 is provided in a bottom of the mounting slot 1211, and the pressure sensor 20 is mounted on a rear side of the front wall body 121 corresponding to the mounting slot 1211.

Based on the arrangement of this embodiment, when a user holds the dictionary pen and presses a front end of a housing 10 of the dictionary pen against content to be scanned, the force-bearing member 122 can bear the pressing force and transmit the pressing force to the bottom of the mounting slot 1211. Then, due to the fourth stress slot 1213 in the bottom of the mounting slot 1211, the stress will be concentrated at and near the fourth stress slot 1213, so that the bottom of the mounting slot 1211 generates concentrated strain at and near the fourth stress slot 1213 under the concentrated stress. As a result, the pressure sensor 20 mounted on the rear side of the front wall body 121 corresponding to the mounting slot 1211 can detect a strain amount and a change condition of the coverage area in a sensitive, reliable and effective manner, and thereby recognize and detect "whether the user presses the front end of the housing 10" accurately.

In this embodiment, parameters (such as a width and the like) of the fourth stress slot 1213 are not limited uniquely.

Referring to FIG. 8, in this embodiment, the fourth stress slot 1213 is formed to run through in a front-rear direction.

With the fourth stress slot 1213 formed to run through in the front-rear direction, a portion of the bottom of the mounting slot 1211 corresponding to the fourth stress slot 1213 can be hollowed out, thereby greatly reducing the structural strength of the bottom of the mounting slot 1211 at and near the fourth stress slot 1213. On this basis, the stress can be concentrated at and near the fourth stress slot 1213, so that the bottom of the mounting slot 1211 can generate concentrated strain at and near the fourth stress slot 1213 under the concentrated stress, and further, the pressure sensor 20 can detect a strain amount and a change condition of the coverage area in a sensitive, reliable and effective manner, and thereby recognize and detect "whether the user presses the front end of the housing 10" accurately.

Apparently, in other possible implementations, the fourth stress slot 1213 may be formed not to run through in the front-rear direction, which is not limited in the embodiment.

Referring to FIG. 8, in this embodiment, the fourth stress slot 1213 is formed to extend in a left-right direction.

With the fourth stress slot 1213 formed to extend in the left-right direction, an extending direction of the fourth stress slot 1213 may be intersected with or even perpendicular to a stress direction, and the structural strength of the bottom of the mounting slot 1211 at and near the fourth stress slot 1213 can be relatively reduced, while the structural strength of portions of the bottom of the mounting slot 1211 at both upper and lower sides of the fourth stress slot 1213 can be ensured. On this basis, the stress can be concentrated at and near the fourth stress slot 1213, so that the bottom of the mounting slot 1211 can generate concentrated bending strain at and near the fourth stress slot 1213 under the concentrated stress, and further, the pressure sensor 20 can detect a strain amount and a change condition of the coverage area in a sensitive, reliable and effective manner, and thereby recognize and detect "whether the user presses the front end of the housing 10" accurately.

Apparently, in other possible implementations, the fourth stress slot 1213 may be formed to extend and either run through or not run through in other directions; and/or, the fourth stress slot 1213 may be formed to extend in other directions; and/or, a plurality of fourth stress slots 1213 may be provided and arranged in a crossed manner, which is not limited in the embodiment.

### Seventh Embodiment

Referring to FIG. 4, in this embodiment, an arc surface 1222 is provided on a front side of the force-bearing member 122.

By adopting the above scheme, when a user holds the dictionary pen and presses a front end of a housing 10 of the dictionary pen against content to be scanned, content to be scanned can be smoothly contacted by the arc surface 1222 on the front side of the force-bearing member 122, so that the risks of scratching or abrading the content to be scanned by the force-bearing member 122 can be effectively reduced, and thereby the service performance of the dictionary pen can be ensured and improved.

The above are merely optional embodiments of the present application and not intended to limit the present application. Those skilled in the art knows well that various modifications and changes may be made to the present application. Any amendments, equivalent substitutions, improvements, and the like within the spirit and principle of the present application are included in the scope of protection defined by the appended claims of the present application.

## Claims

1. A dictionary pen, **characterized in** comprising:
a housing having a front end provided with an opening running through in a vertical direction, wherein the housing has a front wall structure on a front side of the opening, and two side wall structures on left and right sides of the opening, respectively; and
a pressure sensor disposed into the opening and mounted on the front wall structure or either of the side wall structures, wherein the pressure sensor is configured to detect a press action of a user on the front end of the housing, so that the dictionary pen enables or disables a scanning function according to detection data of the pressure sensor.

2. The dictionary pen of claim 1, **characterized in that** the pressure sensor is mounted on either of the side wall structures, the side wall structure with the pressure sensor has a strain detection area at least partially covered by the pressure sensor, and a first stress slot is provided in the strain detection area.

3. The dictionary pen of claim 2, **characterized in that** the first stress slot is formed to extend and run through in the vertical direction.

4. The dictionary pen of claim 2, **characterized in that** the side wall structure includes a side wall body, and a first structural member mounted inside the side wall body and forming the strain detection area, wherein the first structural member is provided with at least part of the first stress slot.

5. The dictionary pen of any one of claims 2 to 4, **characterized in that** a plurality of pressure sensors are provided and arranged on the two side wall structures, respectively.

6. The dictionary pen of claim 1, **characterized in that** the pressure sensor is mounted on the front wall structure, the front wall structure includes a front wall body and a force-bearing member, a mounting slot is provided on a front side of the front wall body, a hollow slot is provided in a bottom of the mounting slot, the force-bearing member is mounted into the mounting slot, the pressure sensor is mounted on a rear side of the force-bearing member, and the pressure sensor is spaced apart from a bottom of the hollow slot.

7. The dictionary pen of claim 6, **characterized in that** a second stress slot is provided on the rear side of the force-bearing member.

8. The dictionary pen of claim 7, **characterized in that** the second stress slot is formed to extend in a left-right direction.

9. The dictionary pen of claim 1, **characterized in that** the pressure sensor is mounted on the front wall structure, the front wall structure includes a front wall body, a force-bearing member, and a second structural member, a mounting slot is provided on a front side of the front wall body, a hollow slot is provided in a bottom of the mounting slot, the force-bearing member and the second structural member are both mounted into the mounting slot, the second structural member is mounted on a rear side of the force-bearing member, the pressure sensor is mounted on a rear side of the second structural member, and the pressure sensor is spaced apart from a bottom of the hollow slot.

10. The dictionary pen of claim 9, **characterized in that** a third stress slot is provided on the rear side of the second structural member and/or the force-bearing member.

11. The dictionary pen of claim 10, **characterized in that** the third stress slot is formed to extend in a left-right direction.

12. The dictionary pen of claim 1, **characterized in that** the pressure sensor is mounted on the front wall structure, the front wall structure includes a front wall body and a force-bearing member, a mounting slot is formed in a front side surface of the front wall body, the force-bearing member is mounted into the mounting slot, a fourth stress slot is provided in a bottom of the mounting slot, and the pressure sensor is mounted on a rear side of the front wall body corresponding to the mounting slot.

13. The dictionary pen of claim 12, **characterized in that** the fourth stress slot is formed to run through in a front-rear direction.

14. The dictionary pen of claim 12, **characterized in that** the fourth stress slot is formed to extend in a left-right direction.

15. The dictionary pen of any one of claims 6 to 14, **characterized in that** an arc surface is provided on a front side of the force-bearing member.

16. The dictionary pen of claim 1, **characterized in that** the pressure sensor is bonded to the front wall structure or either of the side wall structures.

17. The dictionary pen of claim 1, **characterized in that** the pressure sensor is a pressure sensor of a high polymer material.

18. The dictionary pen of claim 1, **characterized in that** the dictionary pen further comprises two glass screens sealing and covering an upper aperture and a lower aperture of the opening, respectively.
